# EUROPÄISCHE PATENTSCHRIFT

(11) **EP 3 276 794 B1**
(45) Veröffentlichungstag und Bekanntmachung des Hinweises auf die Patenterteilung: **19.09.2018**
(21) Anmeldenummer: 16181819.0
(22) Anmeldetag: 29.07.2016
(51) Int. Cl.: H02K 1/27, H02K 15/03, H02K 41/03

(54) **ROTOR FÜR EINEN SYNCHRONMOTOR**
ROTOR FOR SYNCHRONOUS MOTOR
ROTOR D'UN MOTEUR SYNCHRONE

(43) Veröffentlichungstag der Anmeldung: 31.01.2018
(73) Patentinhaber: ETEL S.A., 2112 Môtiers (CH)
(72) Erfinder: GAUSE, Alfred, 73666 Baltmannsweiler (DE); FASOLO, Alessandro, 2000 Neuchâtel (CH); KOMAREVSKIY, Nicolay, 2000 Neuchâtel (CH); POURCHET, Johann, 25650 La Chaux (FR)
(74) Vertreter: Pleyer, Hans Anno

(56) Entgegenhaltungen:
- EP-A2- 2 826 129
- EP-A2- 2 926 439
- FR-A1- 2 578 116
- US-A- 4 445 062

## Beschreibung

### Rotor für einen Synchronmotor

### GEBIET DER TECHNIK

Die vorliegende Erfindung betrifft einen Rotor für einen Synchronmotor, dessen Magnete tangential magnetisiert und in Lücken zwischen Zähnen des Rotors angeordnet sind. Diese Anordnung dient der Flusskonzentration, denn jeder Zahn wird so durch seine beiden benachbarten Magnete magnetisiert.

### STAND DER TECHNIK

Aus der EP 2696469 A1 ist es bekannt, in einem Rotor eines Synchronmotors zwischen sich zum Zentrum des Rotors hin verjüngende Zähne des Rotors tangential magnetisierte Magnete mit trapezförmigem Querschnitt zu platzieren Die zwischen den Zähnen liegenden, sich zum Zentrum des Rotors hin erweiternden Zwischenräume oder Lücken werden durch die im Querschnitt trapezförmigen Magnete gerade ausgefüllt.

Aus der WO 2014/082839 A2 ist ein Rotor mit in regelmäßigen Abständen angeordneten, in radialer Richtung von einem Rotorkern abstehenden und sich im Querschnitt zum Rotorkern hin verjüngende Zähnen bekannt, mit in Lücken zwischen diesen Zähnen angeordneten, tangential magnetisierten und im Querschnitt trapezförmigen ersten und zweiten Magneten. Die Zähne des Rotors sind über Biegegelenke mit dem Rotorkern verbunden.

Dank der tangentialen Magnetisierung der Magnete wirken die Zähne gegenüber dem Stator als magnetische Pole. Der Fluss der Magnete wird über die beiden einen Magnet einschließenden Zähne fast vollständig zum Luftspalt zwischen Stator und Rotor hin umgeleitet. Bei einer ebenfalls üblichen radialen Magnetisierung der Magnete wird demgegenüber nur ein Teil des Flusses zum Luftspalt gelenkt, während ein anderer Teil lediglich über ein magnetisches Joch innerhalb des Rotors zum benachbarten Magnet geleitet wird.

Ein Problem bei der Herstellung solcher und ähnlicher Anordnungen, mit denen der magnetische Fluss vom Rotor zum Stator maximiert werden kann, liegt in den herstellungsbedingten Toleranzen der Form der Magnete. Während diese Toleranzen bei radial magnetisierten, auf den Rotor geklebten Magneten keine Probleme verursachen, können diese Toleranzen bei tangential magnetisierten, zwischen Zähne des Rotors eingesetzten Magneten zu Problemen führen. Die Lücken zwischen den Zähnen müssen auch Magnete am oberen Ende des Toleranzbereichs aufnehmen können, so dass bei den kleiner ausfallenden Magneten Lücken zwischen den Magneten und den Zähnen entstehen können. Solche Lücken können dazu führen, dass die Magnete nicht mit der nötigen Festigkeit im Rotor sitzen und sich im Betrieb lösen. Es kann auch die Symmetrie des Rotors verloren gehen, so dass in erheblichem Umfang zusätzliche Rastkräfte entstehen, die z. B. beim genauen Positionieren mit so einem Motor störend wirken.

### ZUSAMMENFASSUNG DER ERFINDUNG

Es ist daher Aufgabe der Erfindung, ein Verfahren zur Herstellung eines Rotors für einen Synchronmotor anzugeben, mit dem trotz herstellungsbedingter Toleranzen in der Form der Magnete eine symmetrische und stabile Platzierung der Magnete im Rotor ermöglicht wird.

Diese Aufgabe wird gelöst durch einen Verfahren gemäß Anspruch 1.

Es wird ein Rotor für einen Synchronmotor beschrieben, wobei der Rotor in regelmäßigen Abständen angeordnete, in radialer Richtung von einem Rotorkern abstehende und sich im Querschnitt zum Rotorkern hin verjüngende Zähne aufweist, sowie in Lücken zwischen diesen Zähnen angeordnete, tangential magnetisierte und im Querschnitt trapezförmige Magnete. Der Rotor zeichnet sich dadurch aus, dass die Zähne über ein Biegegelenk mit dem Rotorkern verbunden sind, und dass die Zähne in tangentialer Richtung so ausgelenkt sind, dass in jeder zweiten Lücke zwischen zwei Zähnen erste Magnete an äußeren Anschlägen an den dem Rotorkern abgewandten Enden der Zähne anliegen.

Setzt man bei der Herstellung dieses Rotors zunächst die ersten Magnete ein, so werden diese Magnete durch die herrschenden Reluktanzkräfte möglichst weit vom Rotorkern weg, hin zu den Enden der Zähne getrieben, wo sie schließlich an den dort vorgesehenen äußeren Anschlägen anliegen. Auch Magnete, deren Abmessung am oberen Rand der Spezifikation liegt, erreichen diese Position, da sich die Zähne wegen der Biegegelenke in tangentialer Richtung auslenken lassen, wodurch auch für die größeren Magnete genügend Platz entsteht. Setzt man im nächsten Schritt die übrigen Magnete ein, so steht für diese Magnete weniger Platz zur Verfügung, und die Zähne können auch nicht mehr tangential zur Seite gedrückt werden. Die übrigen Magnete werden also nur noch bis zu einer Position nach außen gedrückt, in der ihre schrägen Seitenwände einen Formschluss mit den sich verjüngenden Seitenwänden der Zähne eingehen.

Im Ergebnis erhält man einen Rotor, bei dem trotz einer gewissen Streuung in den Abmessungen der Magnete jeder Magnet in tangentialer Richtung stabil von seinen benachbarten Zähnen in seiner jeweiligen Lage gehalten wird. Die Feldlinien eines jeden Magnets müssen zu den seitlichen Zähnen hin auch keinen Luftspalt überwinden.

Weitere Vorteile und Details der Erfindung werden in der Beschreibung von Ausführungsbeispielen anhand der Figuren offenbart.

### KURZE BESCHREIBUNG DER ZEICHNUNGEN

Dabei zeigt
- Figur 1: ein Rotorsegment in einer Explosionsdarstellung,
- Figur 2: ein Rotorsegment im Querschnitt.

### BESCHREIBUNG DER AUSFÜHRUNGSFORMEN

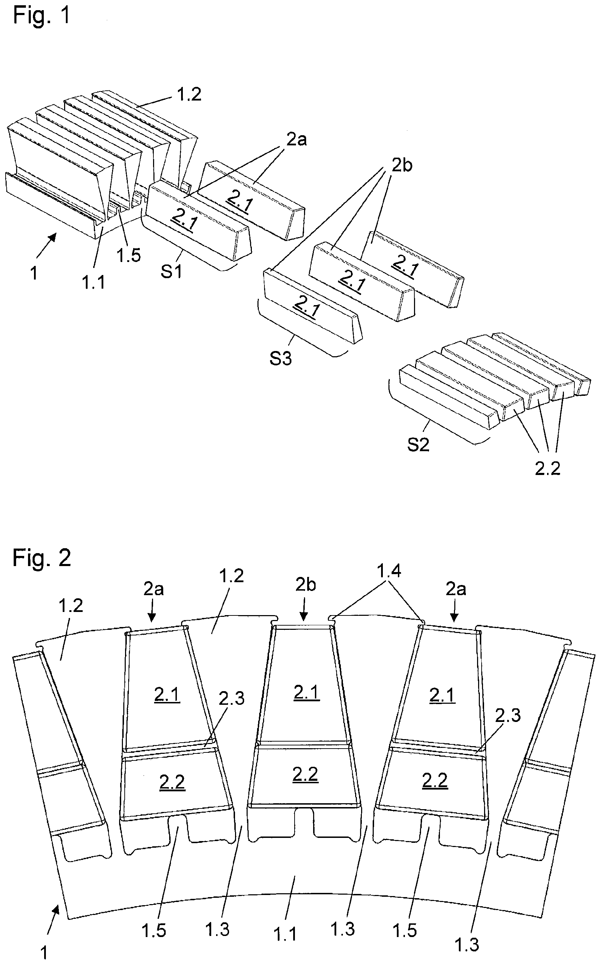

Die Figuren 1 und 2 zeigen ein Segment eines erfindungsgemäßen Rotors 1. Während die Figur 1 eine Explosionsdarstellung des Rotors 1 zeigt, an der auch das Verfahren zu dessen Herstellung nachzuvollziehen ist, zeigt die Figur 2 einen Querschnitt durch den Rotor 1, wobei die Rotorachse senkrecht auf die Zeichenebene steht.

An einem dem Zentrum des Rotors 1 zugewandten Rotorkern 1.1 sind nach außen abstehende Zähne 1.2 angeordnet, die jeweils über eine als Biegegelenk 1.3 wirkende Schwachstelle mit dem Rotorkern 1.1 verbunden sind. Ein möglichst dünn ausgebildetes Biegegelenk 1.3 hat auch den Vorteil, dass nur wenig magnetischer Fluss in den Rotorkern gelangt, wo er nichts zum Drehmoment des Motors beitragen könnte.

Die Zähne 1.2 weisen außerdem an ihrem nach außen gerichteten, also dem Rotorkern 1.1 abgewandten Enden äußere Anschlage 1.4 für erste Magnete 2a auf. Am Rotorkern 1.1 sind außerdem nach außen abstehende innere Anschläge 1.5 zu erkennen, die als Vorsprünge am Rotorkern 1.1 in den Lücken zwischen den Zähnen 1.2 ausgebildet sind.

Der Rotor 1 kann als laminiertes Blechpaket aufgebaut sein. Die Form eines einzelnen Bleches ist in der Draufsicht der Figur 2 zu erkennen. Die Magnete 2a, 2b weisen im Querschnitt eine symmetrische Trapezform auf, sie verjüngen sich also im Querschnitt nach außen hin, bzw. sie sind zum Rotorkern 1.1 hin breiter als auf der dem Rotorkern 1.1 abgewandten Seite.

Die Form der Magnete 2a, 2b entspricht dabei in etwa der Form der Lücken zwischen den Zähnen 1.2, denn diese weiten sich zum Rotorkern 1.1 hin auf. Die einander berührenden Seitenflächen der Zähne 1.2 und der Magnete 2a, 2b sind um den gleichen Winkel zur radialen Richtung geneigt.

Gemäß einer bevorzugten Ausführungsform sind außerdem die Magnete 2a, 2b geteilt, und zwar jeweils in ein äußeres Magnetstück 2.1 und ein inneres Magnetstück 2.2. Die beiden Magnetstücke 2.1, 2.2 sind dabei so aufgeteilt, dass zumindest das äußere Magnetstück 2.1 eine im Querschnitt symmetrische Trapezform aufweist. Gemäß der bevorzugen Ausführungsform gilt dies auch für das innere Magnetstück 2.2, dieses kann jedoch auch andere Formen aufweisen, wie beispielsweise eine Quaderform, die im Querschnitt rechteckig ist.

Man erkennt in der Figur 2, dass die ersten Magnete 2a, die jede zweite Lücke zwischen den Zähnen 1.2 ausfüllen, etwas weiter vom Rotorkern 1.1 entfernt sitzen, und dabei an den äußeren Anschlägen 1.4 der Zähne 1.2 anliegen. Die übrigen Magnete 2b sitzen demgegenüber etwas tiefer bzw. näher am Rotorkern 1.1. Sie erreichen die äußeren Anschläge 1.4 nicht. Ein Formschluss zwischen den seitlichen Begrenzungen der Zähne 1.2 und der übrigen Magnete 2b verhindert, dass die Magnete 2b weiter nach außen gelangen.

Die gemäß der bevorzugten Ausführungsform geteilte Ausführung der Magnete 2a, 2b führt dazu, dass die äußeren Magnetstücke 2.1 wie oben beschrieben abwechselnd weiter weg vom bzw. näher am Rotorkern 1.1 sitzen. Durch die magnetische Abstoßung zwischen den jeweils paarweise mit gleicher Orientierung magnetisierten inneren und äußeren Magnetstücken 2.1, 2.2 werden die inneren Magnetstücke 2.2 ganz nach innen gepresst, bis sie am inneren Anschlag 1.5 des Rotorkerns 1.1 anliegen. Dies führt dazu, dass ein Spalt 2.3 zwischen den beiden Magnetstücken 2.1, 2.2 in radialer Richtung unterschiedlich breit ist. Bei den ersten Magneten 2a fällt er breiter aus als bei den übrigen Magneten 2b, wo er im Extremfall auch verschwinden kann, so dass sich die Magnetstücke 2.1, 2.2 berühren. Dies ist der Fall, wenn die Abmessungen der beteiligten Magnete 2a, 2b bzw. Magnetstücke 2.1, 2.2 am oberen Ende der Spezifikation liegen.

Das Zustandekommen dieser Anordnung der Magnete 2a, 2b, bzw. von deren Magnetstücken 2.1, 2.2 wird verständlich, wenn man das Verfahren zur Herstellung des Rotors 1 betrachtet. Dieses Verfahren lässt sich gut anhand der Figur 1 erklären.

In den Rotor 1 werden in einem ersten Schritt S1 die äußeren Magnetstücke 2.1 der ersten Magnete 2a in jede zweite Lücke zwischen den Zähnen 1.2 eingeschoben. Diese werden durch Reluktanzkräfte bis an die äußeren Anschläge 1.4 gedrückt. Da die Zähne 1.2 dank der Biegegelenke 1.3 tangential bzw. seitlich auslenkbar sind, können die Lücken auch erste Magnete 2a aufnehmen, die von ihren Abmessungen her am oberen Ende der Spezifikation oder Serienstreuung liegen.

In einem weiteren, bevorzugt zweiten Schritt S2 werden dann alle inneren Magnetstücke 2.2 in den Rotor 1 geschoben, wobei diese Magnete durch unmittelbare Abstoßung oder durch Reluktanzkräfte in der inneren Position verharren.

In einem weiteren, bevorzugt dritten Schritt S3 werden dann die äußeren Magnetstücke 2.1 der übrigen Magnete 2b in die noch freien Lücken geschoben. Wegen der bereits durch die äußeren Magnetstücke 2.1 der ersten Magnete 2a tangential ausgelenkten Zähne 1.2 können diese nicht mehr ganz bis zu den äußeren Anschlägen 1.4 gelangen, sie sitzen also etwas näher am Rotorkern 1.1 und werden von den inneren Magnetstücken 2.2 radial abgestoßen. Die inneren Magnetstücke 2.2 werden dabei zum Rotorkern 1.1 bzw. an die inneren Anschläge 1.5 gedrückt.

Der zweite und dritte Schritt S2 bzw. S3 können in einer Abwandlung des Verfahrens auch vertauscht werden.

Die besondere Ausgestaltung der Zähne 1.2 und der Magnete 2a, 2b bewirkt also, dass die Magnete 2a, 2b unabhängig von einer gewissen Serienstreuung ihrer Abmessungen stets eine sehr definierte Lage einnehmen. Es bleiben allenfalls kleine Schwankungen in der radialen Position der übrigen Magnete 2b (bzw. von deren äußerem Magnetstück 2.1) übrig, so dass sich insgesamt ein sehr symmetrischer Rotor ergibt, dessen Magnete definierte und damit stabile Lagen einnehmen. Der Rotor 1 weist bestimmungsgemäß eine gerade Anzahl von Magneten 2a, 2b auf.

Die Schwankungen der Abmessung der Magnete 2a, 2b werden spätestens durch eine Anpassung der radialen Position der Nachbarmagnete ausgeglichen, und können sich nicht über mehrere Magnete hinweg aufsummieren, was zu erheblicher Asymmetrie und locker sitzenden Magneten führen könnte. Die Erfindung kompensiert also die Toleranzen in den Abmessungen der Magnete auf einfache Weise.

Dieser kompensierende Effekt lässt sich auch dann erzielen, wenn die Magnete 2a, 2b nicht wie in der gezeigten, besonders bevorzugten Ausführungsform zweigeteilt sind. Die Magnete 2a, 2b können aber auch in drei oder mehr Stücke geteilt sein, oder aus einem einzigen, trapezförmigen Magnetstück bestehen.

Für Motoren, die besonders schnell drehen sollen, könnten die inneren Magnetstücke 2.2 auch weggelassen werden, und/oder auch die übrigen Magnete 2b. Aus Stabilitätsgründen sollten dann die weggelassenen Elemente durch entsprechend geformte Platzhalter aus nichtmagnetischem Material ersetzt werden. Auch dann entfaltet die Erfindung noch ihre positive, die unterschiedliche Größe der Magnete mittelnde Funktion dank der tangential auslenkbaren Zähne 1.2.

Die äußeren Anschläge 1.4 müssen nicht unbedingt an die Zähne 1.2 angeformt sein, es kann auch eine andere Form von Anschlägen gewählt werden, etwa ein um den Rotor 1 herum laufender Ring oder eine Hülse, die jeweils verhindern, dass die ersten Magnete 2a aus dem Rotor 1 heraus rutschen.

Die Erfindung ist nicht auf rotatorische Motoren beschränkt. Das Sekundärteil eines Linearmotors kann nach demselben Prinzip aufgebaut werden, es stellt lediglich den Grenzfall eines Rotorsegments mit unendlichem Krümmungsradius dar. Der Begriff "Rotor" in den Ansprüchen soll daher nicht auf rotatorische Motoren einschränken.

## Patentansprüche

1. Verfahren zum Herstellen eines Rotors, wobei der Rotor (1) in regelmäßigen Abständen angeordnete, in radialer Richtung von einem Rotorkern (1.1) abstehende und sich im Querschnitt zum Rotorkern (1.1) hin verjüngende Zähne (1.2) aufweist, sowie in Lücken zwischen diesen Zähnen (1.2) angeordnete, tangential magnetisierte und im Querschnitt trapezförmige erste und zweite Magnete (2a, 2b), und wobei die Zähne (1.2) über Biegegelenke (1.3) mit dem Rotorkern (1.1) verbunden sind, wobei das Verfahren **gekennzeichnet ist durch** die folgenden Schritte, mit denen die in äußere Magnetstücke (2.1) und innere Magnetstücke (2.2) zweigeteilten ersten und zweiten Magnete (2a, 2b) in den Rotor (1) eingesetzt werden:
- in einem ersten Schritt (S1) werden alle äußeren Magnetstücke (2.1) der ersten Magnete (2a) in jede zweite Lücke zwischen den Zähnen (1.2) eingesetzt, wobei die jeweils einem der ersten Magnete (2a) benachbarten Zähne (1.2) so tangential ausgelenkt werden, dass diese zuerst eingesetzten äußeren Magnetstücke (2.1) an den äußeren Anschlägen (1,4) im Bereich der dem Rotorkern (1.1) abgewandten Enden der Zähne (1.2) anliegen,
- in einem weiteren Schritt (S2) werden die inneren Magnetstücke (2.2) eingesetzt, die durch magnetische Abstoßung vom jeweiligen äußeren Magnetstück (2.1) zum Rotorkern (1.1) hin gedrückt werden, bis sie an den inneren Anschlägen (1.5) anliegen,
- in einem weiteren Schritt (S3) werden die äußeren Magnetstücke (2.1) der übrigen Magnete (2b) in die noch unbesetzten Lücken zwischen den Zähnen (1.2) eingesetzt, wobei die äußeren Magnetstücke (2.1) der übrigen Magnete (2b) so weit vom Rotorkern (1.1) abrücken, dass sie durch einen Formschluss mit den seitlichen Begrenzungen der Zähne (1.2) gehalten werden.

## Claims

1. Method for producing a rotor wherein the rotor (1) comprises teeth (1.2) arranged at regular intervals, projecting from a rotor core (1.1) in a radial direction, and tapering in cross section towards the rotor core (1.1) and tangentially magnetized first and second magnets (2a, 2b) having a trapezoidal cross sectional shape, arranged in gaps between these teeth (1.2) and
wherein the teeth (1.2) are connected to the rotor core (1.1) by bending joints (1.3), wherein the method is **characterized by** the following steps, by means of which the first and second magnets (2a, 2b) divided into outer magnet pieces (2.1) and inner magnet pieces (2.2) are inserted into the rotor (1):
- in a first step (S1) all outer magnet pieces (2.1) of the first magnets (2a) arc inserted into every other gap between the teeth (1.2), wherein the teeth (1.2) respectively adjacent to one of the first magnets (2a) are deflected tangentially so that the outer magnet pieces (2.1) first inserted abut against the outer stops (1.4) in the region of the ends of the teeth (1.2) facing away from the rotor core (1.1),
- in a further step (S2) the inner magnet pieces (2.2) are inserted, these being pressed by magnetic repulsion from the respective outer magnet piece (2.1) towards the rotor core (1.1) until they abut against the inner stops (1.5),
- in a further step (S3) the outer magnet pieces (2.1) of the remaining magnets (2b) are inserted into the still unoccupied gaps between the teeth (1.2) wherein the outer magnet pieces (2.1) of the remaining magnets (2b) move so far from the rotor core (1.1) that they arc held by a tight fit with the lateral boundaries of the teeth (1.2).

## Revendications

1. Procédé de fabrication d'un rotor, dans lequel le rotor (1) présente des dents (1.2) disposées à intervalles réguliers, faisant saillie dans la direction radiale depuis un noyau du rotor (1.1) et se rétrécissant en section transversale vers le noyau du rotor (1.1), ainsi que des premiers et deuxièmes aimants (2a, 2b) de section transversale en forme de trapèze, aimantés tangentiellement et disposés dans les espaces entre ces dents (1.2), les dents (1.2) étant attachées au noyau du rotor (1.1) par le biais d'articulations flexibles (1.3), le procédé étant **caractérisé par** les étapes suivantes, avec lesquelles les premiers et deuxièmes aimants (2a, 2b) divisés en éléments magnétiques extérieurs (2.1) et en éléments magnétiques intérieurs (2.2) sont insérés dans le rotor (1) :
- dans une première étape (S1) tous les éléments magnétiques extérieurs (2.1) des premiers aimants (2a) sont insérés dans un espace sur deux entre les dents (1.2), les dents (1.2) adjacentes à chaque fois à l'un des premiers aimants (2a) étant déviées tangentiellement de telle sorte que ces éléments magnétiques extérieurs (2.1) insérés en premier s'appliquent contre les butées extérieures (1.4) dans la région des extrémités des dents (1.2) opposées au noyau du rotor (1.1),
- dans une étape supplémentaire (S2), les éléments magnétiques intérieurs (2.2) sont insérés, lesquels sont pressés par répulsion magnétique de l'élément magnétique extérieur respectif (2.1) vers le noyau du rotor (1.1) jusqu'à ce qu'ils s'appliquent contre les butées intérieures (1.5),
- dans une étape supplémentaire (S3), les éléments magnétiques extérieurs (2.1) des aimants restants (2b) sont insérés dans les espaces non encore occupés entre les dents (1.2), les éléments magnétiques extérieurs (2.1) des aimants restants (2b) s'écartant si loin du noyau du rotor (1.1) qu'ils sont retenus par engagement par correspondance de formes avec les limitations latérales des dents (1.2).
